# EUROPEAN PATENT SPECIFICATION

(11) **EP 3 655 645 B1**
(45) Date of publication and mention of the grant of the patent: **13.12.2023**
(21) Application number: 18835200.9
(22) Date of filing: 03.07.2018
(51) Int. Cl.: F03D 1/06, F03D 7/02

(54) **AIRFLOW CONFIGURATION FOR A WIND TURBINE ROTOR BLADE**
LUFTSTROMKONFIGURATION FÜR EIN ROTORBLATT EINER WINDTURBINE
CONFIGURATION D'ÉCOULEMENT D'AIR POUR UNE PALE DE ROTOR DE TURBINE ÉOLIENNE

(30) Priority: 20.07.2017 US 201715654775
(43) Date of publication of application: 27.05.2020
(73) Proprietor: General Electric Renovables España, S.L., 08005 Barcelona (ES)
(72) Inventor: TOBIN, James Robert, Greenville, SC 29615 (US); HERR, Stefan, Greenville, SC 29615 (US); LUEDKE, Jonathan, Glenn, Greenville, SC 29615 (US); CARROLL, Christian, Greenville, SC 29615-4614 (US)
(74) Representative: COPA Copenhagen Patents
(86) International application number: PCT/US2018/040678
(87) International publication number: WO 2019/018131

(56) References cited:
- EP-A1- 2 713 044
- EP-A2- 2 657 513
- US-A1- 2010 278 657
- US-A1- 2011 018 282
- US-A1- 2011 020 128
- US-A1- 2011 250 076
- US-A1- 2016 047 357
- US-A1- 2017 045 031

## Description

### FIELD

The present disclosure relates in general to wind turbine rotor blades, and more particularly to improved airfoil configurations for wind turbine rotor blades.

### BACKGROUND

Wind power is considered one of the cleanest, most environmentally friendly energy sources presently available, and wind turbines have gained increased attention in this regard. A modern wind turbine typically includes a tower, a generator, a gearbox, a nacelle, and a rotor having a rotatable hub with one or more rotor blades. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

Each rotor blade extends from the hub at a blade root of the rotor blade and continues to a blade tip. A cross-section of the rotor blade is defined as an airfoil. The shape of an airfoil may be defined in relationship to a chord line. The chord line is a measure or line connecting the leading edge of the airfoil with the trailing edge of the airfoil. The shape may be defined in the form of X and Y coordinates from the chord line. The X and Y coordinates generally are dimensionless. Likewise, the thickness of an airfoil refers to the distance between the upper surface and the lower surface of the airfoil and is expressed as a fraction of the chord length.

The inboard region, i.e., the area closest to the hub, generally requires the use of relatively thick airfoils (30%≦t/c≦100% or at least 70% t/c). The aerodynamic performance of conventional airfoil designs, however, degrades rapidly for thicknesses greater than 30% of chord largely due to flow separation concerns. For certain increased chord thicknesses (e.g. above 70% of chord), massive flow separation may be unavoidable such that the region of the rotor blade may be aerodynamically compromised.

In some instances, flatback airfoils may be used in the inboard region to allow for higher lift of thick airfoils but at reduced chords. Traditional flatback designs, however, can be complicated to manufacture. Though roundback airfoils are substantially less complicated to manufacture than flatback airfoils and allow the airflow to "feel" a larger trailing edge thickness, such airfoils can create flow separation on the curved surface that is sensitive to small details in the inflow. As such, the separation location and hence the lift from the roundback airfoil can fluctuate to an unacceptable extent.
US 2016/047357 A1 discloses a rotor-blade extension body for use with a rotor blade of a rotor of a wind turbine. The rotor-blade extension body is elongate and is realized, for example, as a steel tube segment. There is a lift-generating element mounted on the circumference of the rotor-blade extension body.
US 2017/045031 A1 discloses a rotor blade that includes a noise reduction means with at least one aerodynamic device for manipulating an airflow flowing from the leading edge section to the trailing edge section. The aerodynamic device is located at the trailing edge section of the rotor blade, and is arranged such that it is able to split up a vortex of the boundary layer into several smaller sub-vortices.
US 2016/0305398 A1 shows a similar rotor blade to that shown in the application, but not having a splitter plate.

Thus, there is a need for new and improved airfoil configurations for wind turbine rotor blades that addresses the aforementioned issues. More specifically, an airfoil that provides improved aerodynamic performance particularly with respect to the inboard region would be advantageous.

### BRIEF DESCRIPTION

Aspects and advantages of the invention will be set forth in part in the following description, or may be obvious from the description, or may be learned through practice of the invention.

In one aspect, the present disclosure is directed to a rotor blade assembly for a wind turbine. The rotor blade assembly includes a rotor blade having exterior surfaces defining a pressure side, a suction side, a leading edge, and a trailing edge each extending in a generally span-wise direction between an inboard region and an outboard region. The inboard region is typically characterized by a rounded trailing edge. Further, the rotor blade assembly further includes at least one airflow separation element mounted to either or both of the pressure or suction sides of the rotor blade within the inboard region and adjacent to the rounded trailing edge. In addition, an edge of the at least one airflow separation element is configured to provide a fixed airflow separation location in the inboard region during standard operation. The rotor blade assembly also includes at least one airflow modifying element configured with the trailing edge of the rotor blade.

The rotor blade assembly includes one or more airflow separation elements mounted to the suction side of the rotor blade and one or more airflow modifying elements mounted to the pressure side of the rotor blade. According to the invention the rotor blade assembly includes opposing airflow separation elements, with at least one airflow separation element mounted on the pressure side and another airflow separation element mounted on the suction side of the rotor blade.

According to the invention, the airflow modifying element(s) include a splitter plate. The splitter plate(s) may be mounted between the opposing airflow separation elements at the trailing edge. More specifically, in certain embodiments, the splitter plate(s) may be secured between the pressure and suction sides of the rotor blade at the trailing edge.

In further embodiments, the airflow separation element(s) may include one or more airflow separation anchors, one or more airflow separation plates, a non-structural fairing, or any other suitable airflow separation elements. In additional embodiments, the one or more airflow separation anchors may have a proximal end and a distal end, with both the proximal and distal ends being fixed to at least one of the pressure side or the suction side of the rotor blade. In such embodiments, the rounded trailing edge of the rotor blade may extend beyond the airflow separation anchors in a generally chord-wise direction.

In additional embodiments, the rotor blade assembly may include a plurality of airflow separation elements or a plurality of airflow modifying elements. In such embodiments, the airflow separation elements and/or the airflow modifying elements may be grouped into a plurality of groups with each group having a different, constant cross-section.

In further embodiments, the airflow separation element(s) and/or the airflow modifying element(s) may have a uniform wall thickness. In such embodiments, a filler material may be arranged in the hollow space of the airflow separation element(s) and/or the airflow modifying element(s).

In another aspect, the present disclosure is directed to a method for improving aerodynamic efficiency of a rotor blade at an inboard region thereof. The method includes forming at least one airflow separation element and at least one airflow modifying element via an extrusion process such that the airflow separation element(s) and the airflow modifying element(s) have a constant cross-section. The method also includes securing the at least one airflow separation element to at least one of a pressure side or a suction side of the rotor blade within the inboard region adjacent to a trailing edge of the rotor blade. As such, an edge of the at least one airflow separation element is configured to provide a fixed airflow separation location in the inboard region during standard operation. Further, the method includes securing the at least one airflow modifying element at the trailing edge of the rotor blade.

In one embodiment, the method may further include segmenting the at least one airflow separation element into a plurality of airflow separation elements. In another embodiment, the method may include segmenting the at least one airflow modifying element into a plurality of airflow modifying elements.

According to the invention, the method includes mounting the airflow separation element(s) to the suction side of the rotor blade and mounting the airflow modifying element(s) to the pressure side of the rotor blade at the trailing edge.

According to the invention, the method includes mounting opposing airflow separation elements to the pressure and suction sides of the rotor blade, respectively. According to the invention, the airflow modifying element(s) include a splitter plate. As such, the method further includes mounting the splitter plate between the opposing airflow separation elements at the trailing edge.

In additional embodiments, the step of securing the airflow separation element(s) to at least one of the pressure side or the suction side of the rotor blade may include attaching the airflow separation element(s) to at least one of the pressure side or the suction side via at least one of double-sided tape, a bond paste, or combinations thereof. In similar embodiments, the step of securing the airflow modifying element(s) at the trailing edge of the rotor blade may include attaching the airflow modifying element(s) at the trailing edge via at least one of double-sided tape, a bond paste, or combinations thereof.

In several embodiments, the method may also include forming the airflow separation element(s) and/or the airflow modifying element(s) from at least one of a thermoset material or a thermoplastic material.

In yet another aspect, the present disclosure is directed to an airflow separation kit for an inboard region of a rotor blade in a wind turbine. The airflow separation kit includes a plurality of airflow separation elements. Each of the airflow separation elements includes a proximal end and a distal end, with the proximal and distal ends configured to mount to at least one of the pressure side or the suction side of the rotor blade within an inboard region of the rotor blade adjacent to a rounded trailing edge thereof. Further, each of the airflow separation elements is configured to provide a fixed airflow separation location in the inboard region during standard operation. The airflow separation kit further includes at least one airflow modifying element for mounting at the rounded trailing edge of the rotor blade. Further, each of the airflow separation elements and the airflow modifying element(s) has a constant cross-section. It should be appreciated that the airflow separation kit may further include any of the features as described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to conventional construction;
FIG. 2 illustrates a cross-sectional view of a rotor blade having a flatback configuration according to conventional construction;
FIG. 3 illustrates a perspective view of one embodiment of a rotor blade assembly, particularly illustrating an airflow separation element at an inboard location of the rotor blade according to the present disclosure;
FIG. 4 illustrates another perspective view of another embodiment of the rotor blade assembly, particularly illustrating airflow separation elements arranged into a plurality of groups at different span-wise locations according to the present disclosure;
FIG. 5 illustrates a perspective view of the yet another embodiment of the rotor blade assembly, particularly illustrating opposing airflow separation elements at an inboard location of the rotor blade according to the present disclosure;
FIG. 6 illustrates a cross-sectional view of one embodiment of a rotor blade assembly, particularly illustrating opposing airflow separation elements and an airflow modifying element mounted thereon according to the present disclosure;
FIG. 7 illustrates a cross-sectional view of another embodiment of a rotor blade assembly, particularly illustrating opposing airflow separation elements and an airflow modifying element mounted thereon according to the present disclosure;
FIG. 8 illustrates a cross-sectional view of still another embodiment of a rotor blade assembly, particularly illustrating an airflow separation element mounted to a suction side of a rotor blade and an airflow modifying element mounted to a pressure side of the rotor blade according to the present disclosure;
FIG. 9 illustrates a perspective view of one embodiment of an airflow separation element having a uniform wall thickness according to the present disclosure;
FIG. 10 illustrates a perspective view of one embodiment of an airflow separation element having a uniform wall thickness according to the present disclosure, particularly illustrating caps configured at each end of the airflow separation element;
FIG. 11 illustrates a perspective view of one embodiment of an airflow separation element having a uniform wall thickness according to the present disclosure particularly illustrating a filler material configured within the airflow separation element; and
FIG. 12 illustrates a flow diagram of one embodiment of a method for improving aerodynamic efficiency of a rotor blade at an inboard region thereof according to the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

Generally, the present disclosure is directed to a rotor blade assembly for a wind turbine having an improved airfoil configuration. More specifically, the rotor blade assembly includes unique combinations of airflow separation elements (such as flow anchors, etc.) and airflow modifying elements (such as pressure side attachments, splitter plates, etc.) mounted an inboard region of the rotor blade as well as manufacturing and/or attachments methods for such combinations. Providing such elements in the root transition area of the rotor blade alters the airflow to increase the effective chord length in areas of the rotor blade that are less efficient due to the transition to the substantially circular blade root. As such, the unique combinations provided herein are configured to improve aerodynamic efficiency.

The combination of elements of the present disclosure provide many advantages not present in the prior art. For example, the combination of the airflow separation elements and the airflow modifying elements enhances the lift of the rotor blade and reduces drag of the blade root (from near the maximum chord inboard). The increase in lift and the decrease in drag increases the axial induction, thereby improving the annual energy production of the wind turbine. In addition, the combination of elements of the present disclosure significantly reduces the manufacturing difficulty and cost associated with traditional flatback airfoils.

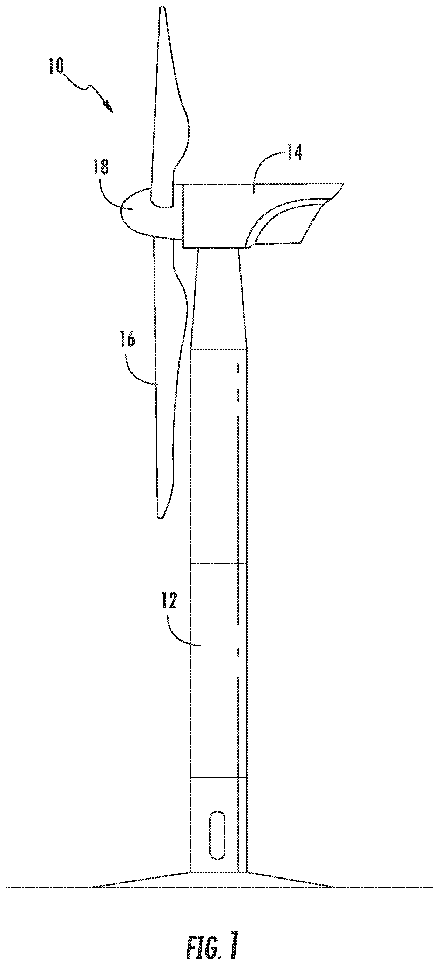

Referring now to the drawings, FIG. 1 illustrates a perspective view of a wind turbine 10 according to conventional construction. As shown, the wind turbine 10 includes a tower 12 with a nacelle 14 mounted thereon. A plurality of rotor blades 16 are mounted to a rotor hub 18, which is in turn connected to a main flange that turns a main rotor shaft. The wind turbine power generation and control components are housed within the nacelle 14. The view of FIG. 1 is provided for illustrative purposes only to place the present invention in an exemplary field of use. It should be appreciated that the invention is not limited to any particular type of wind turbine configuration. In addition, the present invention is not limited to use with wind turbines, but may be utilized in any application having rotor blades.

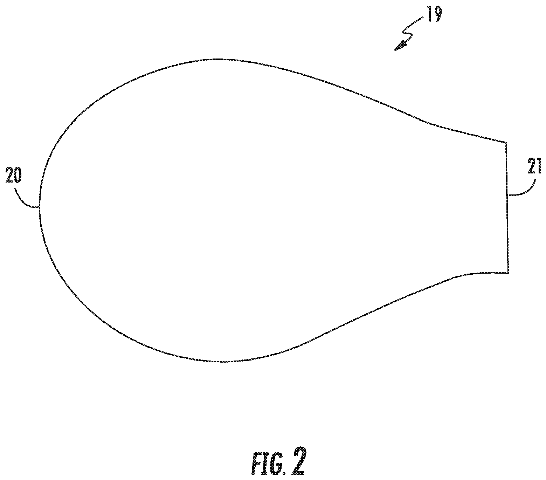

FIG. 2 illustrates a cross-section of a flatback airfoil 19 according to conventional construction. As shown, the flatback airfoil 19 includes a leading edge 20 and a flat trailing edge 21 and is typically utilized in the inboard region of a rotor blade to allow for higher lift of thick airfoils at reduced chords. As mentioned, traditional flatback designs as shown in FIG. 2, however, can be complicated to manufacture.

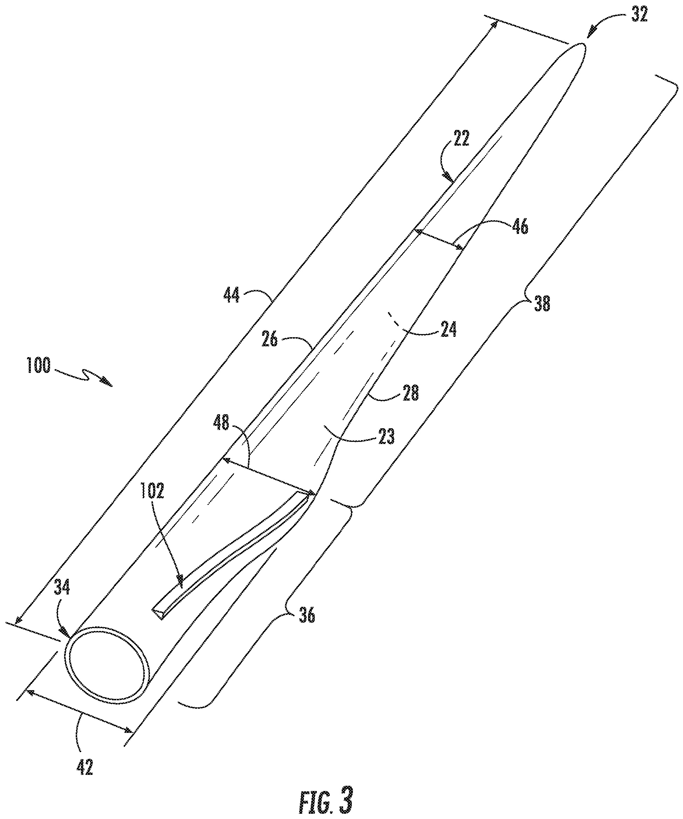

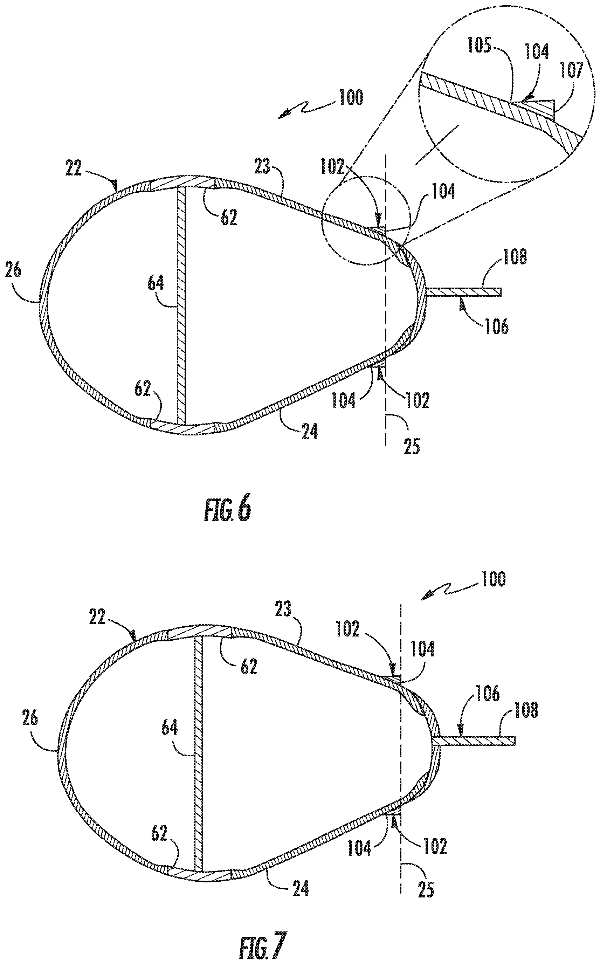

Thus, the present disclosure is directed to an improved rotor blade assembly that acts as a flatback airfoil without the associated manufacturing issues. More specifically, as generally illustrated in FIGS. 3-8, a rotor blade assembly 100 according to the present disclosure is illustrated. As shown, the rotor blade assembly 100 includes a rotor blade 22 having exterior surfaces defining a pressure side 24, a suction side 23, a leading edge 26, and a trailing edge 28. The pressure and suction sides 23, 24 may each extend between the leading edge 26 and the trailing edge 28. Further, the exterior surfaces extend between an inboard region 36 and an outboard region 38 in a generally span-wise direction. The inboard region 36 includes the blade root 34 and the outboard region 38 includes the blade tip 32. The pressure and suction sides 24, 23, as well as the leading and trailing edges 26, 28, are generally aerodynamic surfaces having aerodynamic contours, as is generally known in the art. More specifically, as shown in FIGS. 6-8, portions of the trailing edge 28, e.g. in the inboard region 36, have been shortened and rounded to form a rotor blade 22 having a smaller cross-sectional area with a rounded or roundback configuration.

Referring particularly to FIG. 3, the rotor blade 22 may further define a chord 42 and a span 44 extending in chord-wise and span-wise directions, respectively. Further, as shown, the chord 42 may vary throughout the span 44 of the rotor blade 22. Thus, as discussed below, a local chord 46 may be defined for the rotor blade 22 at any point on the rotor blade 22 along the span 44. Further, the rotor blade 22 may define a maximum chord 48, as shown.

One or more structural components may also be included within the rotor blade 22 to provide structural support to the rotor blade 22. For example, FIGS. 6-8 illustrate a shear web 64 extending between two spar caps 62. The shear web 64 and spar caps 62 may extend through the rotor blade 22 or any portion thereof in the generally span-wise direction. Further, as shown, the external surfaces defining the pressure side 24 and suction side 23 may include, or may cover, the spar caps 62.

Referring generally to FIGS. 3-10, the rotor blade assembly 100 includes at least one airflow separation element 102. As such, the airflow separation element(s) 102 is configured to provide a fixed airflow separation location in the inboard region 36 during standard operation of the wind turbine 10. For example, in certain embodiments, the airflow separation element(s) 102 may be located from about 75% chord to about 95% chord from the leading edge 26 of the rotor blade 22. Further, the airflow separation element(s) 102 may extend through any suitable span-wise portion of the rotor blade 22, and may thus have any suitable length relative to the span 44. For example, in one embodiment, the airflow separation element(s) 102 may extend from the blade root 34 towards the blade tip 32 as shown in FIG. 3. By fixing the location of airflow separation in the inboard region 36 of the rotor blade 22, the airflow separation element(s) 102 may augment the lift capacity, reduce the drag, and/or augment the lift to drag ratio of the rotor blade 22 during standard operation.

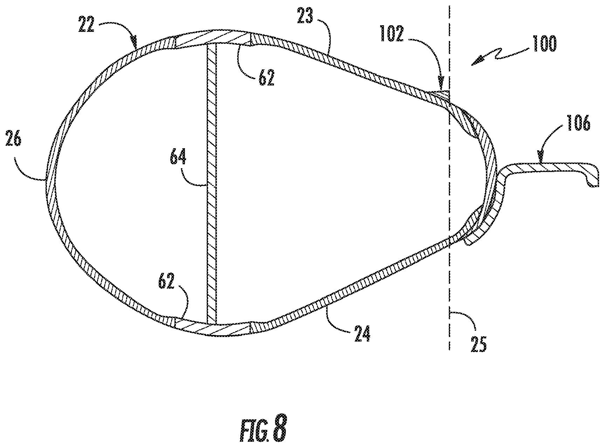

The airflow separation element(s) 102 may include any suitable elements configured to separate airflow from a surface of the blade 22. For example, in certain embodiments, the airflow separation element(s) 102 may include one or more airflow separation anchors 104, one or more airflow separation plates, a non-structural fairing, or any other suitable airflow separation elements. For example, as shown in FIGS. 6-8, the airflow separation element(s) 102 correspond to one or more flow separation anchors 104. More specifically, as shown in the illustrated embodiments of FIGS. 6 and 7, the rotor blade 22 includes opposing flow separation anchors 104 mounted on each of the pressure and suction sides 24, 23, respectively. In alternative embodiments, the airflow separation elements 102 may be mounted to a single side of the rotor blade 22. For example, as shown in FIG. 8, the airflow separation elements 102 may be mounted to the suction side 23 of the rotor blade 22 only. Further, as shown, an outer surface of the flow separation anchor(s) 104 is typically designed to include an aerodynamic contour that matches the aerodynamic surface of the pressure and suction sides 23, 24. For example, in some embodiments, the outer surfaces of the flow separation anchors 104 may define a generally continuous aerodynamic surface with an exterior surface, such as the pressure side 24 or suction side 23, of the rotor blade 22. A generally continuous aerodynamic surface is a surface that has a generally continuous aerodynamic contour. Thus, when two surfaces define a generally continuous aerodynamic surface, there is relatively little interruption in the aerodynamic contour at the intersection of the two surfaces.

Referring to FIG. 6 (inset), the airflow separation anchors 104 generally include a proximal end 105 and a distal end 107, with the proximal and distal ends 105, 107 being mounted to either or both of the pressure or suction sides 23, 24 of the rotor blade 22. In such an embodiment, as shown, the rounded trailing edge 28 is configured to extend beyond the airflow separation anchor(s) 104 in a generally chord-wise direction. Further, as shown, the distal ends 107 or edges of the airflow separation anchors 104 may define an airflow separation line 25. As such, since the distal ends 107 of the airflow separation anchors 104 align along the airflow separation line, the airfoil mimic a flatback airfoil during operation. Alternatively, the distal ends 107 of the airflow separation anchors 1054 may be offset. In addition, as shown, the airflow separation anchors 104 typically include a wedge-shaped cross-section having a substantially flat distal end 107. As such, when mounted to the rotor blade 22, the airflow separation anchors 104 are configured to mimic a flatback airfoil. In additional embodiments, the airflow separation element(s) 102 may have a constant cross-section in a span-wise direction of the rotor blade 22, which is discussed in more detail below.

Referring particularly to FIGS. 6-8, the rotor blade assembly 100 also includes at least one airflow modifying element 106 configured with the trailing edge 28 of the rotor blade 22. More specifically, as shown in FIG. 6, the airflow modifying element 106 may be mounted to the pressure side 24 of the rotor blade 22 and may extend up to and from the trailing edge 28. Further, as shown, the airflow modifying element(s) 102 may include a splitter plate 108.

For example, as shown in FIGS. 6 and 7, the splitter plate(s) 108 may be mounted between the opposing airflow separation elements 102 at the trailing edge 28. In such embodiments, the splitter plate 108 may be mounted to the rotor blade 22 using any suitable means. For example, as shown in FIG. 6, the splitter plate 108 may be mounted to the trailing edge 28 via at least one of double-sided tape, adhesives, and/or fasteners. Alternatively, as shown in FIG. 7, the splitter plate 108 may be secured between the pressure and suction sides 24, 23 of the rotor blade 22 at the trailing edge 28, e.g. during the manufacturing process of the rotor blade 22.

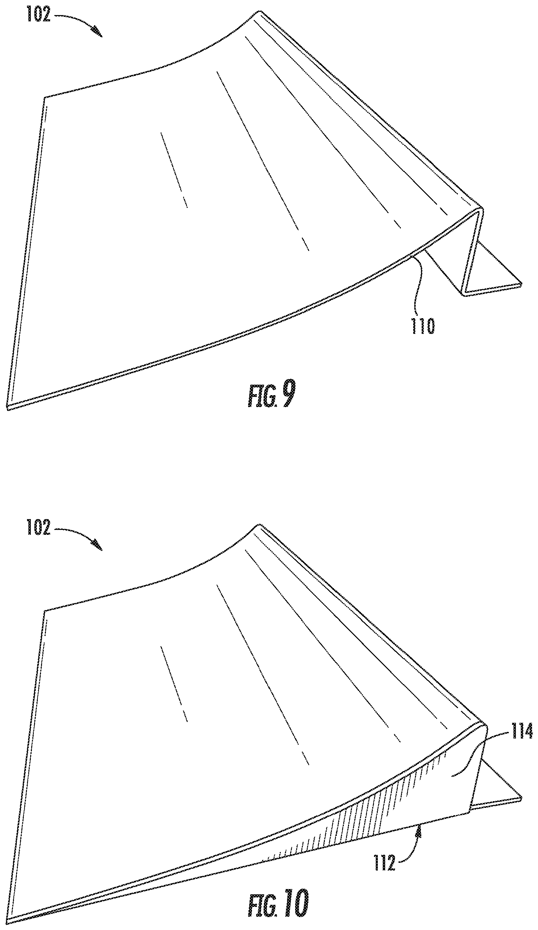

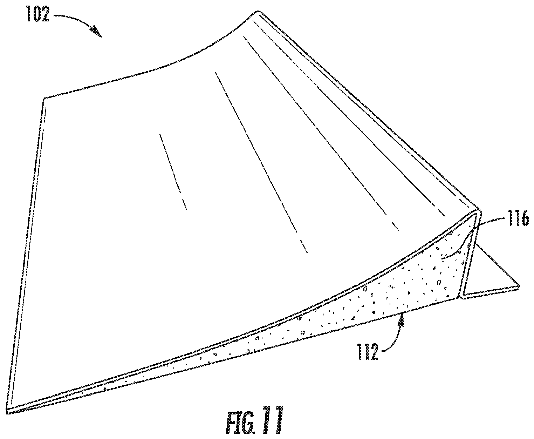

Referring now to FIGS. 9-11, perspective views of one embodiment of an airflow separation element 102 having a substantially (i.e. +/- 10%) uniform wall thickness 110 according to the present disclosure are illustrated. Thus, as shown in FIG. 9, the airflow separation element 102 defines a generally hollow cross-section. A solid cross-section extruded flow anchor is heavy, expensive, and impractical to extrude because of its size. Thus, the airflow separation element 102 of FIGS. 9-11 addresses the aforementioned issues. More specifically, the wall thickness 110 may range from about 1 millimeter (mm) to about 10 mm, such as about 3 mm. In further embodiments, the wall thickness 110 may be less than 1 mm or greater than 10 mm.

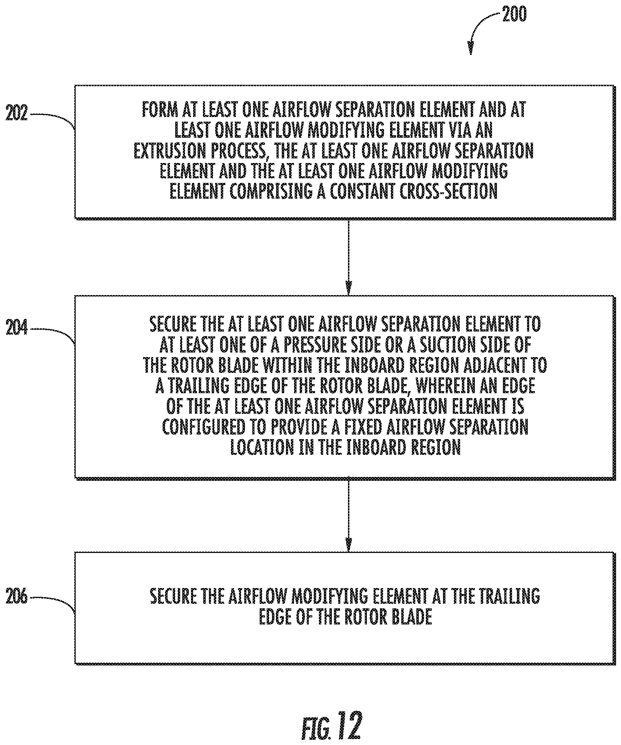

Referring particularly to FIGS. 10 and 12, the hollow space between the rotor blade and the airflow separation element 102 may be covered and/or filled with a filler material 112 so as to eliminate any noise concerns. For example, as shown in FIG. 10, the filler material 112 corresponds to opposing caps 114 configured at each end of the airflow separation element 102. In contrast, as shown in FIG. 10, the filler material 112 corresponds to a foam material 116.

Referring now to FIG. 12, a flow diagram of one embodiment of a method 200 for improving aerodynamic efficiency of a rotor blade 22 is illustrated. As shown at 202, the method 200 includes forming at least one airflow separation element 102 and at least one airflow modifying element 106 via an extrusion process such that the airflow separation element(s) 102 and the airflow modifying element(s) 106 have a constant cross-section. More specifically, in certain embodiments, the design of such elements 102, 106 (in particular, the airflow separation anchors 104) may intentionally be created using constant cross-sections in the span-wise direction. While not necessarily aerodynamically optimal, elements 102, 106 having a constant cross-section allows for highly efficient manufacturing and installation options. For example, from a manufacturing perspective, constant cross-section components can be easily extruded from a wide range of polymer-based materials. Moreover, such components can be co-extruded or in-line bonded with an attachment medium, such as a double-sided foam tape.

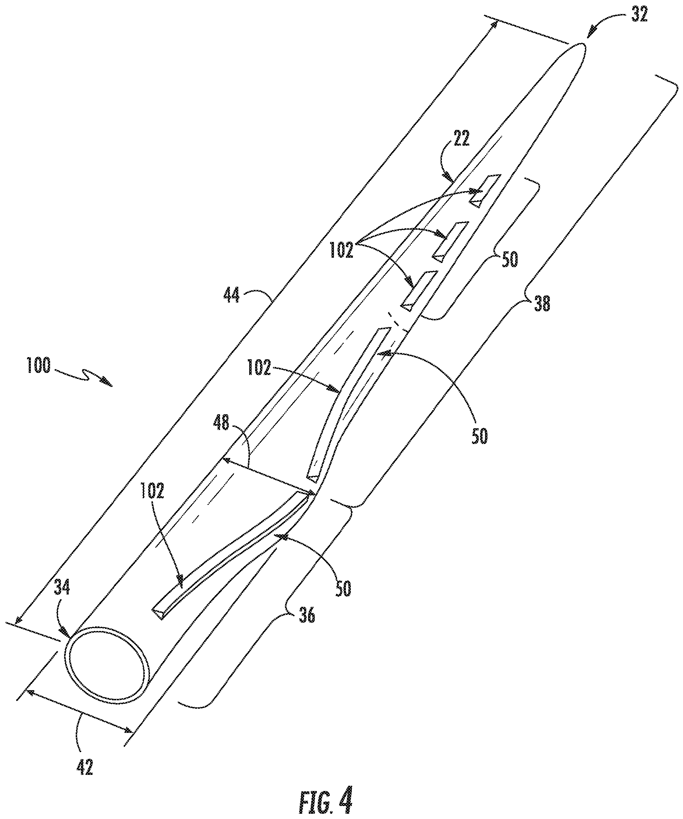

In addition, as shown in the embodiment of FIG. 4, a plurality of airflow separation elements 102 are arranged into a plurality of groups 50 at different span-wise locations down the rotor blade 22. In such embodiments, each group 50 of elements 102 may have different, constant cross-sections, i.e. different sized extrusions can be formed and mounted at varying locations down the span 44 of the rotor blade 22. Similarly, in further embodiments, the method 200 may include segmenting a single extruded airflow separation element 102 into a plurality of airflow separation elements 102 (e.g. as shown in the outboard-most group of FIG. 4). Further, in additional embodiments, the method 200 may include segmenting the airflow modifying element 106 into a plurality of airflow modifying elements 106. As such, the extruded airflow separation element 102 and/or the airflow modifying element 106 can be cut into segments if desired or left as one continuous part. More specifically, in certain embodiments, more rigid extruded parts may be segmented due to expansion, contraction, and/or strain-related concerns. Alternatively, less rigid parts may be used in longer lengths, i.e. if the elastomeric nature of the material can withstand blade strains and expansion/contraction concerns.

Referring still to FIG. 12, as shown at 204, the method 200 includes securing the airflow separation element 102 to either or both of pressure or suction side 24, 23 of the rotor blade 22 within the inboard region 36 adjacent to the trailing edge 28 of the rotor blade 22. Thus, as mentioned, an edge 107 of the airflow separation element(s) 102 is configured to provide a fixed airflow separation location in the inboard region 36 during standard operation. As shown at 206, the method 200 includes securing the airflow modifying element 106 at the trailing edge 28 of the rotor blade 22. For example, in one embodiment, the method 200 may include mounting one of the airflow separation element(s) 102 to the suction side 23 of the rotor blade 22 and mounting the airflow modifying element(s) 106 (e.g. a pressure side attachment) to the pressure side 24 of the rotor blade 22 at the trailing edge 28.

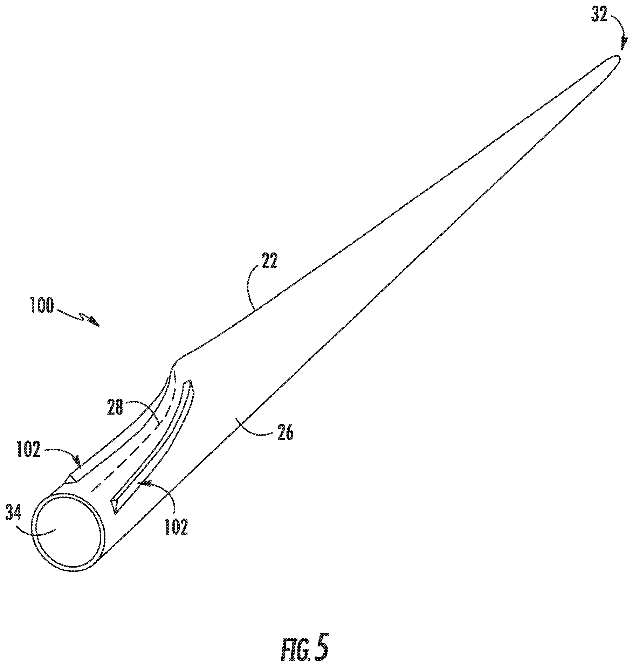

In alternative embodiments, as shown in FIGS. 5 and 6, the method 200 may include mounting opposing airflow separation elements 102 to the pressure and suction sides 24, 23 of the rotor blade 22, respectively. In addition, as shown, the method 200 may include mounting at least one airflow modifying element(s) 106 at the trailing edge 28. In such embodiments, the airflow modifying element(s) 106 may include a splitter plate 108. As such, the method 200 may further include mounting the splitter plate 108 between the opposing airflow separation elements 102 at the trailing edge 28.

In additional embodiments, the airflow separation element(s) 102 may be secured to either or both of the pressure or suction sides 24, 23 of the rotor blade 22 via at least one of double-sided tape, a bond paste, or combinations thereof. Similarly, the airflow modifying element(s) 106 may be secured at the trailing edge 28 of the rotor blade 22 via at least one of double-sided tape, a bond paste, or combinations thereof. In further embodiments, where the elements 102, 106 are segmented, in-line double sided foam tape may be cut into multiple strips to allow for structural adhesive to be used between segments during installation.

Each airflow separation element(s) 102 and/or airflow modifying element(s) 106 according to the present disclosure may be formed from any suitable materials. For example, the material utilized to form the element(s) 102, 106 may preferably be lightweight, and may further preferably be suitably rigid to maintain its structure during use in a wind turbine 10. More specifically, in several embodiments, element(s) 102, 106 may be formed from a thermoset material, a thermoplastic material, metal, or combinations thereof, and may also be optionally reinforced with any suitable material, such as fiber material.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art.

## Claims

1. A rotor blade assembly (100) for a wind turbine (10), the rotor blade assembly (100) comprising:
a rotor blade (16) having exterior surfaces defining a pressure side (24), a suction side (23), a leading edge (26), and a trailing edge (28) each extending in a generally span-wise direction between an inboard region (36) and an outboard region (38), the inboard region (36) comprising a rounded trailing edge (28);
at least one airflow separation element (102) mounted to at least one of the pressure side (24) or the suction side (23) of the rotor blade (16) within the inboard region (36) and adjacent to the rounded trailing edge (28), wherein an edge of the at least one airflow separation element (102) is configured to provide a fixed airflow separation location in the inboard region (36); and,
at least one airflow modifying element (106) configured with the trailing edge (28) of the rotor blade (16), wherein at least one of the airflow separation element (102) or the airflow modifying element comprises a constant cross-section, and wherein the rotor blade assembly (100) comprises opposing airflow separation elements (102), wherein one of the airflow separation elements (102) is configured on the pressure side (24) and the other airflow separation element (102) is configured on the suction side (23), and
wherein the at least one airflow modifying element (106) comprises a splitter plate (108), the splitter plate (108) mounted between the opposing airflow separation elements (102).

2. The rotor blade assembly (100) of claim 1, wherein the at least one airflow separation element (102) is mounted to the suction side (23) of the rotor blade (16) and the at least one airflow modifying element is mounted to the pressure side (24) of the rotor blade (16).

3. The rotor blade assembly (100) of any of the preceding claims, wherein the splitter plate (108) is secured between the pressure and suction sides (24, 23) of the rotor blade (16) at the trailing edge (28).

4. The rotor blade assembly (100) of any of the preceding claims, wherein the at least one airflow separation element (102) comprises at least one of the following: one or more airflow separation anchors (104), one or more airflow separation plates, or a non-structural fairing.

5. The rotor blade assembly (100) of claim 4, wherein the one or more airflow separation anchors (104) comprise a proximal end and a distal end, the proximal and distal ends being fixed to at least one of the pressure side (24) or the suction side (23) of the rotor blade (16), wherein the rounded trailing edge (28) extends beyond the at least one airflow separation anchor in a generally chord-wise direction.

6. The rotor blade assembly (100) of any of the preceding claims, further comprising at least one of a plurality of airflow separation elements (102) or a plurality of airflow modifying elements, at least one of the plurality of airflow separation elements (102) or the plurality of airflow modifying elements (106) being grouped in a plurality of groups, each of the groups having a different, constant cross-section.

7. The rotor blade assembly (100) of any of the preceding claims, wherein at least one of the at least one airflow separation element (102) or the at least one airflow modifying element (106) comprises a uniform wall thickness (110).

8. The rotor blade assembly (100) of claim 7, further comprising a filler material (112) arranged with at least one of the at least one airflow separation element (102) or the at least one airflow modifying element (106).

9. A method for improving aerodynamic efficiency of a rotor blade (16) at an inboard region (36) thereof, the method comprising:
forming at least two airflow separation elements (102) and at least one airflow modifying element via an extrusion process, the at least two airflow separation elements (102) and the at least one airflow modifying element comprising a constant cross-section, wherein the airflow modifying element (102) comprises a splitter plate (108);
securing two of the airflow separation elements (102) opposingly to a pressure side (24) and a suction side (23) of the rotor blade (16) within the inboard region (36) adjacent to a trailing edge (28) of the rotor blade (16), wherein an edge of the at least one airflow separation element (102) is configured to provide a fixed airflow separation location in the inboard region (36); and,
securing the splitter plate (108) between the opposing airflow separation elements (102) at the trailing edge (28) of the rotor blade (16).

10. The method of claim 9, further comprising segmenting at least one of the at least two airflow separation elements (102) or the at least one airflow modifying element (106) into a plurality of segments.

11. The method of claims 9 or 10, wherein the splitter plate (108) is secured between the pressure side (24) and the suction side (23) of the rotor blade at the trailing edge (28).

12. The method of claims 9, 10, or 11, wherein forming the at least one airflow separation element (102) and the at least one airflow modifying element (106) further comprises forming the at least one airflow separation element (102) and at least one airflow modifying element (106) with a uniform wall thickness (110).

## Patentansprüche

1. Rotorblattanordnung (100) für eine Windkraftanlage (10), wobei die Rotorblattanordnung (100) Folgendes umfasst:
ein Rotorblatt (16) mit Außenoberflächen, die eine Druckseite (24), eine Saugseite (23), eine Eintrittskante (26) und eine Austrittskante (28) definieren, die sich jeweils in einer allgemeinen Spannenrichtung zwischen einem Innenbordbereich (36) und einem Außenbordbereich (38) erstrecken, wobei der Innenbordbereich (36) eine abgerundete Austrittkante (28) umfasst;
mindestens ein Luftströmungsablösungselement (102), das an der Druckseite (24) und/oder der Saugseite (23) des Rotorblatts (16) innerhalb des Innenbordbereichs (36) und der abgerundeten Austrittskante (28) benachbart angebracht ist, wobei eine Kante des mindestens einen Luftströmungsablösungselements (102) dazu konfiguriert ist, einen festen Luftströmungsablösungsort in dem Innenbordbereich (36) bereitzustellen; und
mindestens ein Luftströmungsänderungselement (106), das mit der Austrittskante (28) des Rotorblatts (16) konfiguriert ist, wobei das Luftströmungsablösungselement (102) und/oder das Luftströmungsänderungselement einen konstanten Querschnitt umfassen und wobei die Rotorblattanordnung (100) gegenüberliegende Luftströmungsablösungselemente (102) umfasst, wobei eines der Luftströmungsablösungselemente (102) auf der Druckseite (24) konfiguriert ist und das andere Luftströmungsablösungselement (102) auf der Saugseite (23) konfiguriert ist, und
wobei das mindestens eine Luftströmungsänderungselement (106) eine Splitterplatte (108) umfasst, wobei die Splitterplatte (108) zwischen den gegenüberliegenden Luftströmungsablösungselementen (102) angebracht ist.

2. Rotorblattanordnung (100) nach Anspruch 1, wobei das mindestens eine Luftströmungsablösungselement (102) an der Saugseite (23) des Rotorblatts (16) angebracht ist und das mindestens eine Luftströmungsänderungselement an der Druckseite (24) des Rotorblatts (16) angebracht ist.

3. Rotorblattanordnung (100) nach einem der vorangehenden Ansprüche, wobei die Splitterplatte (108) zwischen der Druck- und der Saugseite (24, 23) des Rotorblatts (16) an der Austrittskante (28) befestigt ist.

4. Rotorblattanordnung (100) nach einem der vorangehenden Ansprüche,
wobei das mindestens eine Luftströmungsablösungselement (102) mindestens eines der Folgenden umfasst: einen oder mehrere Luftströmungsablösungsanker (104), eine oder mehrere Luftströmungsablösungsplatten oder eine nicht tragende Verkleidung.

5. Rotorblattanordnung (100) nach Anspruch 4, wobei der eine oder die mehreren Luftströmungsablösungsanker (104) ein proximales Ende und ein distales Ende umfassen, wobei das proximale Ende und das distale Ende an der Druckseite (24) und/oder der Saugseite (23) des Rotorblatts (16) fixiert sind, wobei sich die abgerundete Austrittskante (28) in einer allgemeinen Sehnenrichtung über den mindestens einen Luftströmungsablösungsanker hinaus erstreckt.

6. Rotorblattanordnung (100) nach einem der vorangehenden Ansprüche, ferner umfassend eine Vielzahl von Luftströmungsablösungselementen (102) und/oder eine Vielzahl von Luftströmungsänderungselementen, wobei die Vielzahl von Luftströmungsablösungselementen (102) und/oder die Vielzahl von Luftströmungsänderungselementen (106) in einer Vielzahl von Gruppen gruppiert sind, wobei die Gruppen jeweils einen unterschiedlichen konstanten Querschnitt aufweisen.

7. Rotorblattanordnung (100) nach einem der vorangehenden Ansprüche, wobei das mindestens eine Luftströmungsablösungselement (102) und/oder das mindestens eine Luftströmungsänderungselement (106) eine gleichmäßige Wanddicke (110) umfasst.

8. Rotorblattanordnung (100) nach Anspruch 7, ferner umfassend einen Füllstoff (112), der mit dem mindestens einen Luftströmungsablösungselement (102) und/oder dem mindestens einen Luftströmungsänderungselement (106) angeordnet ist.

9. Verfahren zum Verbessern des aerodynamischen Wirkungsgrads eines Rotorblatts (16) in einem Innenbordbereich (36) davon, wobei das Verfahren Folgendes umfasst:
Bilden von mindestens zwei Luftströmungsablösungselementen (102) und mindestens einem Luftströmungsänderungselement mittels eines Extrusionsprozesses, wobei die mindestens zwei Luftströmungsablösungselemente (102) und das mindestens eine Luftströmungsänderungselement einen konstanten Querschnitt umfassen, wobei das Luftströmungsänderungselement (102) eine Splitterplatte (108) umfasst;
Befestigten von zweien der Luftströmungsablösungselemente (102) gegenüberliegend an einer Druckseite (24) und einer Saugseite (23) des Rotorblatts (16) innerhalb des Innenbordbereichs (36), einer Austrittskante (28) des Rotorblatts benachbart, wobei eine Kante des mindestens einen Luftströmungsablösungselements (102) dazu konfiguriert ist, einen festen Luftströmungsablösungsort in dem Innenbordbereich (36) bereitzustellen; und
Befestigen der Splitterplatte (108) zwischen den gegenüberliegenden Luftströmungsablösungselementen (102) an der Austrittskante (28) des Rotorblatts (16).

10. Verfahren nach Anspruch 9, ferner umfassend das Segmentieren der mindestens zwei Luftströmungsablösungselemente (102) und/oder des mindestens einen Luftströmungsänderungselements (106) in eine Vielzahl von Segmenten.

11. Verfahren nach Anspruch 9 oder 10, wobei die Splitterplatte (108) zwischen der Druckseite (24) und der Saugseite (23) des Rotorblatts an der Austrittskante (28) befestigt ist.

12. Verfahren nach Anspruch 9, 10 oder 11, wobei das Bilden des mindesten seinen Luftströmungsablösungselements (102) und des mindestens einen Luftströmungsänderungselements (106) ferner das Bilden des mindestens einen Luftströmungsablösungselements (102) und des mindestens einen Luftströmungsänderungselements (106) mit einer gleichmäßigen Wanddicke (110) umfasst.

## Revendications

1. Ensemble formant pale de rotor (100) pour une éolienne (10), l'ensemble formant pale de rotor (100) comportant :
une pale de rotor (16) ayant des surfaces extérieures définissant un côté en pression (24), un côté en dépression (23), un bord d'attaque (26), et un bord de fuite (28) s'étendant chacun dans une direction allant généralement dans le sens de l'envergure entre une région côté intérieur (36) et une région côté extérieur (38), la région côté intérieur (36) comportant un bord de fuite arrondi (28) ;
au moins un élément de séparation d'écoulement d'air (102) monté sur au moins l'un parmi le côté en pression (24) ou le côté en dépression (23) de la pale de rotor (16) à l'intérieur de la région côté intérieur (36) et de manière adjacente par rapport au bord de fuite arrondi (28), dans lequel un bord dudit au moins un élément de séparation d'écoulement d'air (102) est configuré à des fins de mise en oeuvre d'un emplacement de séparation d'écoulement d'air fixe dans la région côté intérieur (36) ; et,
au moins un élément de modification d'écoulement d'air (106) configuré avec le bord de fuite (28) de la pale de rotor (16), dans lequel au moins l'un parmi l'élément de séparation d'écoulement d'air (102) ou l'élément de modification d'écoulement d'air comporte une coupe transversale constante, et dans lequel l'ensemble formant pale de rotor (100) comporte des éléments de séparation d'écoulement d'air opposés (102), dans lequel l'un des éléments de séparation d'écoulement d'air (102) est configuré sur le côté en pression (24) et l'autre élément de séparation d'écoulement d'air (102) est configuré sur le côté en dépression (23), et
dans lequel ledit au moins un élément de modification d'écoulement d'air (106) comporte un panneau de séparation (108), le panneau de séparation (108) étant monté entre les éléments de séparation d'écoulement d'air opposés (102).

2. Ensemble formant pale de rotor (100) selon la revendication 1, dans lequel ledit au moins un élément de séparation d'écoulement d'air (102) est monté sur le côté en dépression (23) de la pale de rotor (16) et ledit au moins un élément de modification d'écoulement d'air est monté sur le côté en pression (24) de la pale de rotor (16).

3. Ensemble formant pale de rotor (100) selon l'une quelconque des revendications précédentes, dans lequel le panneau de séparation (108) est assujetti entre les côtés en pression et en dépression (24, 23) de la pale de rotor (16) au niveau du bord de fuite (28).

4. Ensemble formant pale de rotor (100) selon l'une quelconque des revendications précédentes, dans lequel ledit au moins un élément de séparation d'écoulement d'air (102) comporte au moins l'un parmi les suivants : un ou plusieurs dispositifs d'ancrage de séparation d'écoulement d'air (104), une ou plusieurs plaques de séparation d'écoulement d'air, ou un carénage non travaillant.

5. Ensemble formant pale de rotor (100) selon la revendication 4, dans lequel lesdits un ou plusieurs dispositifs d'ancrage de séparation d'écoulement d'air (104) comportent une extrémité proximale et une extrémité distale, les extrémités proximale et distale étant fixées sur au moins l'un parmi le côté en pression (24) ou le côté en dépression (23) de la pale de rotor (16), dans lequel le bord de fuite arrondi (28) s'étend au-delà dudit au moins un dispositif d'ancrage de séparation d'écoulement d'air dans une direction allant généralement dans le sens de la corde.

6. Ensemble formant pale de rotor (100) selon l'une quelconque des revendications précédentes, comportant par ailleurs au moins l'un parmi une pluralité d'éléments de séparation d'écoulement d'air (102) ou une pluralité d'éléments de modification d'écoulement d'air, au moins des éléments parmi la pluralité d'éléments de séparation d'écoulement d'air (102) ou la pluralité d'éléments de modification d'écoulement d'air (106) étant groupés en une pluralité de groupes, chacun des groupes ayant une coupe transversale constante différente.

7. Ensemble formant pale de rotor (100) selon l'une quelconque des revendications précédentes, dans lequel au moins l'un parmi ledit au moins un élément de séparation d'écoulement d'air (102) ou ledit au moins un élément de modification d'écoulement d'air (106) comporte une épaisseur de paroi uniforme (110).

8. Ensemble formant pale de rotor (100) selon la revendication 7, comportant par ailleurs un matériau de remplissage (112) agencé avec au moins l'un parmi ledit au moins un élément de séparation d'écoulement d'air (102) ou ledit au moins un élément de modification d'écoulement d'air (106).

9. Procédé servant à améliorer l'efficacité aérodynamique d'une pale de rotor (16) au niveau d'une région côté intérieur (36) de celle-ci, le procédé comportant les étapes consistant à :
former au moins deux éléments de séparation d'écoulement d'air (102) et au moins un élément de modification d'écoulement d'air au moyen d'un processus d'extrusion, lesdits au moins deux éléments de séparation d'écoulement d'air (102) et ledit au moins un élément de modification d'écoulement d'air comportant une coupe transversale constante, dans lequel l'élément de modification d'écoulement d'air (102) comporte un panneau de séparation (108) ;
assujettir deux des éléments de séparation d'écoulement d'air (102) de manière opposée sur un côté en pression (24) et un côté en dépression (23) de la pale de rotor (16) à l'intérieur de la région côté intérieur (36) de manière adjacente par rapport à un bord de fuite (28) de la pale de rotor (16), dans lequel un bord dudit au moins un élément de séparation d'écoulement d'air (102) est configuré à des fins de mise en oeuvre d'un emplacement de séparation d'écoulement d'air fixe dans la région côté intérieur (36) ; et,
assujettir le panneau de séparation (108) entre les éléments de séparation d'écoulement d'air opposés (102) au niveau du bord de fuite (28) de la pale de rotor (16).

10. Procédé selon la revendication 9, comportant par ailleurs l'étape consistant à segmenter au moins l'un parmi lesdits au moins deux éléments de séparation d'écoulement d'air (102) ou ledit au moins un élément de modification d'écoulement d'air (106) en une pluralité de segments.

11. Procédé selon les revendications 9 ou 10, dans lequel le panneau de séparation (108) est assujetti entre le côté en pression (24) et le côté en dépression (23) de la pale de rotor au niveau du bord de fuite (28).

12. Procédé selon les revendications 9, 10 ou 11, dans lequel l'étape consistant à former ledit au moins un élément de séparation d'écoulement d'air (102) et ledit au moins un élément de modification d'écoulement d'air (106) comporte par ailleurs l'étape consistant à former ledit au moins un élément de séparation d'écoulement d'air (102) et ledit au moins un élément de modification d'écoulement d'air (106) avec une épaisseur de paroi uniforme (110).
